# EUROPÄISCHE PATENTSCHRIFT

(11) **EP 1 447 609 B1**
(45) Veröffentlichungstag und Bekanntmachung des Hinweises auf die Patenterteilung: **24.05.2006**
(21) Anmeldenummer: 03003328.6
(22) Anmeldetag: 13.02.2003
(51) Int. Cl.: F16L 55/16

(54) **Vorrichtung zum Abdichten der Einmündungsstelle eines Anschlusskanals in einen Sammelkanal**
Device for sealing the junction where a branch pipe joins a main conduit
Dispositif pour étancher la zone de jonction d'un tuyau de dérivation dans un tuyau principal

(43) Veröffentlichungstag der Anmeldung: 18.08.2004
(73) Patentinhaber: RS Technik AG, 8627 Grüningen (CH)
(72) Erfinder: Schmidt, Kurt, 8702 Zollikon (CH)
(74) Vertreter: Schaad, Balass, Menzl & Partner AG

(56) Entgegenhaltungen:
- EP-A- 1 154 194
- DE-A- 4 207 038
- DE-A- 4 213 898
- US-A- 5 950 682
- US-A- 6 039 079

## Beschreibung

Die vorliegende Erfindung betrifft eine Vorrichtung zum Abdichten der Einmündungsstelle eines Anschlusskanals in einen Sammelkanal gemäss Patentanspruch 1.

Es sind verschiedene Vorrichtungen und unterschiedliche Verfahren bekannt, um die Einmündungsstelle eines Anschlusskanals in einen nicht begehbaren Sammelkanal abzudichten. Dieses auch Einbinden bzw. Wiedereinbinden genannte Abdichten eines Anschlusskanals in einen Sammelkanal kann beispielsweise notwendig sein, wenn die Einmündungsstelle defekt gegangen ist, beispielsweise bei Abwasserrohrleitungen durch Wurzelwuchs oder andere Belastungen, die zum Abbröckeln oder Ausbrechen von Material geführt haben. Weiter kann es notwendig sein, nach dem Einbringen eines Inliners in den Sammelkanal und nach dessen Aushärten, diesen bei der Einmündungsstelle äufzufräsen und diese abzudichten und ihr einen strömungstechnisch guten Verlauf zu geben, damit keine Teile hängenbleiben können.

Aus der WO 95/27167 ist es beispielsweise bekannt, eine formstabile jedoch biegeelastische Schalungs-Manschette zur Verschalung einer Rohrhauptleitung mittels eines rohrgängigen Roboterfahrzeugs in die Rohrhauptleitung einzubringen, bei der Einmündung einer Anschlussleitung in die richtige Drehlage zu verbringen und aufzuweiten, so dass sie stabil in der Rohrhauptleitung sitzt. Die Schalungs-Manschette weist eine Aussparung für eine dehnbare Gummiblase auf, die ebenfalls mittels des Roboterfahrzeugs derart gesetzt und aufgeblasen wird, dass sie den Raum zwischen der Aussparung der Schalungs-Manschette der Anschlussleitung und dem ausgebrochenen Erdreich bei der Einmündungsstelle abschliesst. Weiter weist die Manschette Aussparungen für die Einspeisung eines aushärtenden vorzugsweise Epoxi-Mörtels in den genannten Raum auf.

Eine weitere Einrichtung und ein Verfahren zum Abdichten der Einmündungsstelle einer Rohrleitung in eine Sammelrohrleitung ist in der EP-A-0 674 132 offenbart. Sie weist ein Schalungsschild auf, das mittels eines selbstfahrenden Kanalroboterfahrzeugs durch die Sammelrohrleitung zur abzudichtenden Stelle verbringbar ist. Am Schalungsschild sind teleskopierbare Stützen angeordnet, die nach dem Positionieren des Schalungsschildes ausgefahren werden. Durch eine Aussparung des Schalungsschildes hindurch wird wiederum eine aufblasbare Blase zum Abdichten gesetzt. In den von der Blase, vom Schalungsschild und dem ausgebrochenen Erdreich begrenzten Raum wird Abdichtmittel eingespritzt. Das Schalungsschild mit den Stützen und der Gummiblase verbleibt in der Rohrleitung bis das Abdichtmittel ausgehärtet ist. Das Roboterfahrzeug ist von den zum Aushärten in der Rohrleitung verbleibenden Teilen abkoppelbar, wodurch es zur Reparatur weiterer Einmündungsstellen zur Verfügung steht.

Eine weitere Einrichtung zum Abdichten der Einmündungsstelle einer Rohrleitung in eine Sammelrohrleitung ist in der DE-A-4213898 offenbart. Sie weist einen aufblasbaren zylindrischen Körper aus zusammenfaltbarem, flexiblem Material auf, an dessen Stirnenden scheibenförmige Abschlussplatten vorgesehen sind. Vom zylindrischen Körper steht seitlich ein Ansatz ab. In einem Übergangsbereich zwischen dem Körper und dem Ansatz ist ein Mundstück angeordnet, in welches zwei Injektionsleitungen münden. Die Injektionsleitungen sind dazu bestimmt Abdichtmaterial zum Mundstück zu führen. Die Injektionsleitungen führen von einer der Anschlussplatten durch den vom zylindrischen Körper begrenzten Innenraum zum Mundstück.

Es ist eine Aufgabe der vorliegenden Erfindung, eine Vorrichtung zum Abdichten der Einmündungsstelle eines nicht begehbaren Anschlusskanals in einen nicht begehbaren Sammelkanal zu schaffen, die äusserst einfach im Aufbau und in der Handhabung ist.

Diese Aufgabe wird mit einer Vorrichtung gelöst, die die Merkmale des Patentanspruchs 1 aufweist. Mittels einer aufblasbaren Packermanschette für den Sammelkanal und einer, im aufgeblasenen Zustand von dieser abstehenden, hutförmigen, aufblasbaren Seitenmanschette für den Anschlusskanal kann mit einfachsten Mitteln und auf einfache Art und Weise die zu sanierende Einmündungsstelle abgedichtet werden. Das Zuführen von Abdichtmaterial wird durch einen von Aussen her zugänglichen Tunnel gewährleistet, der für die Aufnahme einer Zuleitung für das Abdichtmaterial bestimmt ist und gleichzeitig den Innenraum der Packermanschette und Seitenmanschette von der Umgebung dicht abtrennt.

Bevorzugte Ausführungsformen der erfindungsgemässen Vorrichtung sind in den abhängigen Patentansprüchen angegeben.

Die Erfindung wird anhand eines in der Zeichnung dargestellten Ausführungsbeispiels näher erläutert. Es zeigen rein schematisch:
- Fig. 1: in einem Längsschnitt einen Abschnitt eines rohrförmigen Sammelkanals mit einem in diesen mündenden Anschlusskanal und einen darin eingesetzten Packer;
- Fig. 2: in einem Horizontalschnitt den Sammelkanal und den eingesetzten Packer in Draufsicht; und
- Fig. 3: in gleicher Darstellung wie in Fig. 1 den Packer mit gelüfteter Packer- und Seitenmanschette.

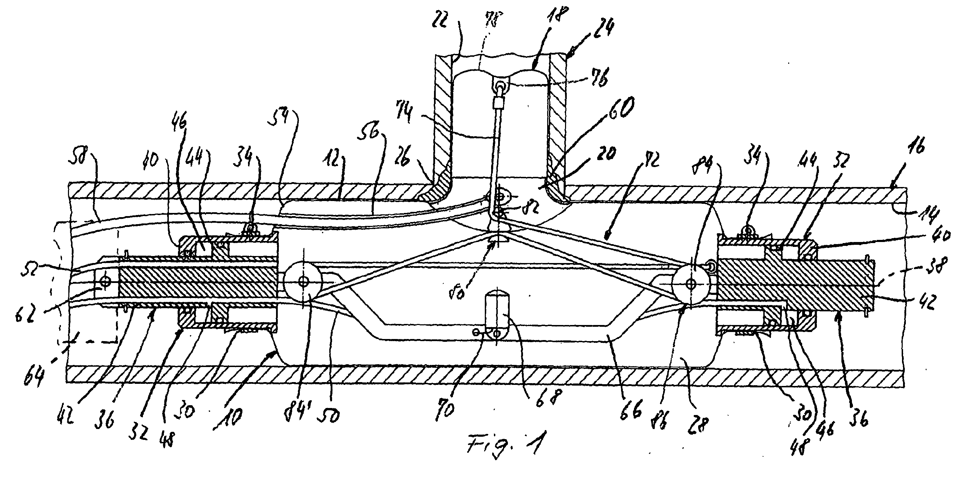

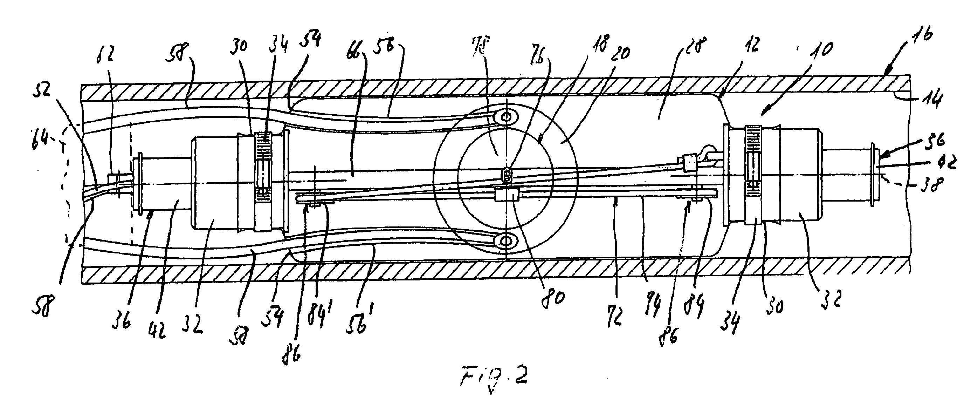

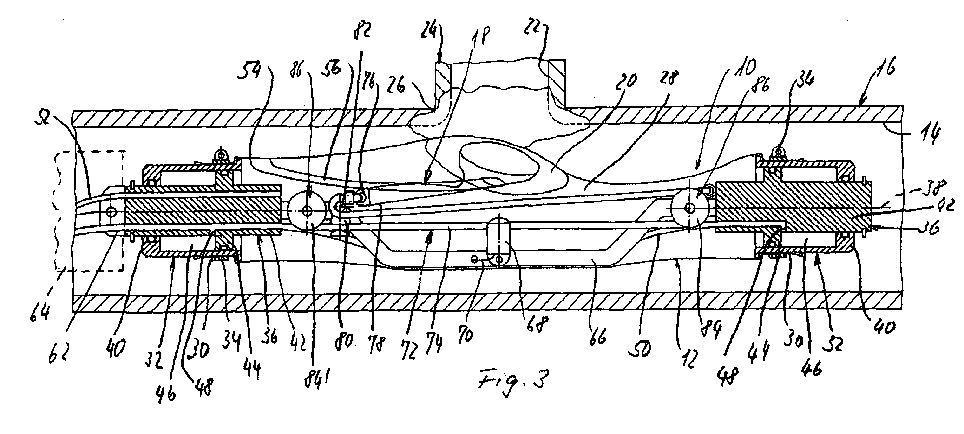

Der in den Fig. 1 bis 3 gezeigte Packer 10 weist eine schlauchartige Packermanschette 12 aus durchsichtigem elastischem Material auf. Sie ist aus einem in der Fig. 3 gezeigten gelüfteten Zustand mittels Druckluft aufblasbar, wodurch sie sich dichtend an die Innenwand 14 eines Sammelkanals 16 anlegt, wie dies aus den Fig. 1 und 2 hervorgeht. Beim Sammelkanal 16 handelt es sich beispielsweise um eine nicht begehbare Sammelrohrleitung eines Abwasserkanalisationssystems.

In Längsrichtung der Packermanschette 12 gesehen etwa mittig ist an dieser eine hutförmige Seitenmanschette 18 befestigt, die vorzugsweise aus demselben Material wie die Packermanschette 12 gefertigt ist. Zur Befestigung der Seitenmanschette 18 an der Packermanschette 12 dient ein Kragen 20, der in bevorzugter Weise ebenfalls aus demselben Material hergestellt ist. Der Kragen 20 ist einerseits umfangsseitig mit der Seitenmanschette 18, beispielsweise durch Ankleben oder mittels Schweissen, dicht verbunden und andererseits in gleicher Art und Weise mit der Packermanschette 12 entlang einem an eine entsprechende Öffnung anschliessenden Randbereich der Packermanschette 12.

Selbstverständlich ist es denkbar, die Seitenmanschette 18 direkt mit der Packermanschette 12 zu verbinden, beispielsweise durch Kleben oder Schweissen.

Beim Aufblasen legt sich die Seitenmanschette 18 dichtend an die Innenwand 22 eines Anschlusskanals 24 an, welcher bei einer Einmündungsstelle 26 in den Sammelkanal 16 einmündet, wie dies insbesondere Fig. 1 zeigt. Beim Anschlusskanal 24 handelt es sich beispielsweise um eine von einem Gebäude herkommende, nicht begehbare Abwasserrohrleitung, welche der Entsorgung des Gebäudes dient.

Im gelüfteten Zustand der Packermanschette 12 befindet sich die Seitenmanschette 18 in umgestülptem Zustand im von der Packermanschette 12 begrenzten Innenraum 28, vergleiche Fig. 3.

Die beiden axialen Enden 30 der Packermanschette 12 umfassen je einen ringförmigen Läufer 32 und sind an diesem mittels eines in Umfangsrichtung verengbaren Befestigungsmittels 34 dichtend fixiert. Jeder der beiden Läufer 32 ist an einem ihm zugeordneten Lagerelement 36 in axialer Richtung des Packers 10, welche durch die Längsachse 38 gegeben ist, aufeinander zu und voneinander weg verschiebbar gelagert. Die ringförmigen Läufer 32 weisen an ihren voneinander abgewandten Enden becherartig einen Boden 40 auf, der von einem Schaftteil 42 des Lagerelements 36 durchgriffen ist. In einer Umfangsnut des Bodens 40 befindet sich ein am Schaftteil 42 anliegender O-Ring zum Abdichten der dem Innenraum 28 zugewandten Seite gegenüber der Umgebung.

Vom Schaftteil 42 steht in Umfangsrichtung und radial gegen aussen ein Wulst 44 ab, der umfangsseitig mit einer Nut versehen ist, in welcher ein weiterer O-Ring angeordnet ist. Dieser wirkt mit der innenliegenden Seite des ringförmigen Läufers 32 dichtend zusammen. Der Boden 40 und Wulst 44 begrenzen in axialer Richtung einen Hubraum 46, der über eine in radialer Richtung verlaufende Bohrung 48 mit einer Steuerleitung 50 verbunden ist. Die Steuerleitung 50 verläuft in axialer Richtung durch das Schaftteil 42 des in den Figuren gezeigten linken Lagerelements 36 hindurch, dann durch den Innenraum 28 zum Schaftteil 42 des in den Figuren rechten Lagerelements 36 und in diesem bis zur betreffenden Bohrung 48. Wird die Steuerleitung 50 mit Druckluft beaufschlagt, werden die Läufer 32 durch den Druck im Hubraum 46 voneinander weg gedrängt, wogegen beim Lüften der Steuerleitung 50 die Läufer 32 sich aufeinander zu bewegen können.

Durch den Schaftteil 42 des in den Figuren linken Lagerelements 36 verläuft weiter eine Druckluftleitung 52, welche an der dem Innenraum 28 zugewandten Stirnseite des Schaftteils 42 in diesen mündet. Wird Druckluft durch die Druckluftleitung 52 dem Innenraum zugeführt, wird die Packermanschette 12 aufgeblasen und die Seitenmanschette 18 durch Umstülpen in den Anschlusskanal 24 eingebracht und ebenfalls aufgeblasen. Die Druckluftleitung 52 kann mittels eines nicht dargestellten Ventils zum Lüften des Innenraums 28 mit der Umgebung verbunden werden.

Von einem Endbereich 54 der Packermanschette 12, der an den in den Figuren links gezeigten Läufer 32 anschliesst, verlaufen in der Art eines Schlauches zwei Tunnels 56 durch den Innenraum 28 zum Kragen 20, wo diese an die Umgebung ausmünden. Wie dies besonders der Fig. 2 entnehmbar ist, sind die Tunnels 56 in bevorzugter Weise symmetrisch zu einer Längsmittelebene vorgesehen, in welcher die Längsachse 38 und die Achse der Seitenmanschette 18 im aufgeblasenen Zustand liegen. Diese Tunnels 56 sind zur Aufnahme einer Zuleitung 58 für Abdichtmaterial 60, das zum Abdichten der Einmündungsstelle in den vom Packer 10, dem Anschlusskanal 24 und dem Sammelkanal 16 und evtl. dem Erdreich begrenzten Raum einzubringen ist, und zur Aufnahme einer Entlüftungsleitung 58' bestimmt. Durch letztere kann die Luft entweichen, wenn Abdichtmittel 60 eingespritzt wird.

Im aufgeblasenen Zustand der Packermanschette 12 und der Seitenmanschette 18 legt sich der Tunnel 56, der in bevorzugter Weise aus demselben Material wie die Packermanschette 12 und Seitenmanschette 18 hergestellt ist, an die Zuleitung 58 und die Entlüftungsleitung 58' an und dichtet den genannten Raum ab, so dass weder Luft noch Abdichtmaterial 60 in die Tunnels 56 ausfliessen kann.

Wie dies aus den Fig. 1 und 2 hervorgeht, verläuft im aufgeblasenen Zustand der Packermanschette 12 deren Endbereich mit der Öffnung der Tunnels 56, vom Läufer 32 her, nahezu in einer rechtwinklig zur Längsachse 38 verlaufenden Ebene. Die Zuleitung 58 und Entlastungsleitung 58' kann somit problemlos am Läufer 32 vorbeigeführt werden, ohne dass sie das saubere Anliegen der Packermanschette an der Innenwand 14 behindern.

Das in den Figuren links gezeigte Lagerelement 36 weist an seinem aussenliegenden freien Ende eine Kupplung 62 auf, mittels welcher der Packer 10 an einem allgemein bekannten, gestrichelt angedeuteten selbstfahrenden Roboterfahrzeug 64 ankoppelbar ist. Auf diesem Roboterfahrzeug 64 befinden sich vorzugsweise auch die Kartuschen mit dem Abdichtmaterial 60, die notwendigen Antriebe und Ventile für das Einspritzen des Abdichtmaterials 60 und die Steuerung der Luft in der Steuerleitung 50 und Druckluftleitung 52.

Im Innenraum 28 verläuft ein rohrartiger Träger 66, welcher die Schaftteile 42 der beiden Lagerelemente 36 fest miteinander verbindet. Der Träger 66 ist gebogen, so dass er im Mittelbereich in Richtung von der Seitenmanschette 18 weg in einem Abstand zur Längsachse 38 verläuft. Die in radialer Richtung äussersten Teile des Trägers 66 sind von der Längsachse 38 etwa gleich weit entfernt, wie die radial äussersten Teile der Läufer 32. In der Mitte des Trägers 66 ist an diesem eine Fernsehkamera 68 befestigt, deren Speise- und Signalleitungen 70 im Träger 66 zum in den Figuren links gezeigten Lagerelement 36 und durch dieses hindurch zum Roboterfahrzeug 64 verlaufen. Von diesem führen die betreffenden Leitungen zu einer oberirdischen Steuereinrichtung, wie sie im Zusammenhang mit Kanalsanierungsrobotersystemen bekannt ist. Im Blickfeld der Fernsehkamera 68 befindet sich der Kragen 20.

Die Fernsehkamera 28 kann schwenkbar am Träger 66 befestigt sein und weiter ist es möglich, am Träger 66 eine Lichtquelle anzuordnen. Diese sowie die Fernsehkamera 68 sind durch die Packermanschette 12 und Seitenmanschette 18 gegen Verschmutzung bestens geschützt.

Weiter ist im Innenraum 28 eine Expanderanordnung 72 vorhanden. Diese weist ein gummielastisches Zugband 74 auf, das mit einem Ende an einer Befestigungszunge 76 fixiert ist, welche in Richtung gegen den Innenraum 28 von etwa der Mitte des die Seitenmanschette 18 an ihrem freien Ende abschliessenden Wandbereichs 78 absteht. Von der Befestigungszunge 76 verläuft das Zugband 74 zu einem Umlenkelement 80. Von diesem nach der Umlenkung um einen Umlenkstift 82 zu einer ersten Umlenkrolle 84 eines Umlenkrollenpaares 86, welche am Träger 66 benachbart zum in den Figuren rechts gezeigten Lagerelement 36 frei drehbar gelagert ist. Nach der Umlenkung um die erste Umlenkrolle 84 verläuft das Zugband 74 zur zweiten Umlenkrolle 84', welche in entsprechender Art und Weise am Träger 66 benachbart zum in den Figuren links gezeigten Lagerelement 36 frei drehbar gelagert ist. Nach der Umlenkung um diese zweite Umlenkrolle 84' führt das Zugband 74 zum in den Figuren rechts gezeigten Lagerelement 36, an welchem das diesseitige Ende befestigt ist.

Das Umlenkelement 80 ist an jenem Abschnitt des Zugbandes 74 befestigt, welcher sich zwischen der ersten und zweiten Umlenkrolle 84, 84' erstreckt und zwar derart, dass im aufgeblasenen Zustand der Packermanschette 12 und Seitenmanschette 18 der Umlenkstift 82 sich in etwa bei der Längsachse der Seitenmanschette 18 befindet, wie dies die Fig. 1 und 2 zeigen. Ist der Innenraum 28 gelüftet, befindet sich das Umlenkelement 80 bei der zweiten Umlenkrolle 84', wie dies Fig. 3 zeigt.

In bevorzugter Weise wird ein Zweikomponentenabdichtmaterial 60 verwendet, das sehr schnell aushärtet. In diesem Fall sind die die beiden Komponenten enthaltenden Kartuschen und die Mischeinrichtung, vorzugsweise ein statischer Mischer, am Roboterfahrzeug 64 angeordnet. Der Packer 10 lässt sich ohne Auswechseln der Packermanschette 12 mit der Seitenmanschette 18 mehrmals verwenden, da er sich vom die Einmündungsstelle 26 abdichtenden, mindestens nahezu ausgehärteten Abdichtmaterial 60 abschälen lässt und für die nächste Anwendung allenfalls einzig eine neue Zuleitung 58 und evtl. Entlüftungsleitung 58' in den bzw. die Tunnels 56 einzusetzen ist. Vorzugsweise weisen die Zuleitung 58 und die Entlüftungsleitung 58' an ihrem freien Ende ein radial nach aussen abstehendes, beispielsweise tellerartiges Dichtelement auf, welches zusätzlich verhindert, dass Abdichtmaterial 60 mit dem Tunnel 56 in Berührung kommen kann.

Die Verwendungs- und Funktionsweise der in den Figuren gezeigten Vorrichtung ist wie folgt. Der an ein Roboterfahrzeug 64 angekoppelte Packer 10 wird im entlüfteten Zustand gemäss Fig. 3 in den Sammelkanal 16 bis zur Einmündungsstelle 26 des Anschlusskanals 24 eingefahren. (In Fig. 3 sind der besseren Übersicht halber die Zuleitung 58 und Entlüftungsleitung 58' nicht gezeigt. Diese werden jedoch vor dem Einfahren in den Sammelkanal 16 in die Tunnels 56 eingeführt). Die Läufer 32 befinden sich in ihrer äusseren Endlage. Mit Hilfe der Fernsehkamera 68 wird die Lage überprüft und diese ferngesteuert mittels des Roboterfahrzeugs 64 in axialer Richtung und in Drehrichtung derart eingestellt, dass der Kragen 20 genau vor die Einmündungsstelle 26 zu liegen kommt, wie dies Fig. 3 zeigt. In Fig. 3 ist auch das bei der Einmündungsstelle 26 weggebrochene, fehlende Material erkennbar.

Dann wird die Steuerleitung 50 mit der Umgebung verbunden und die Druckluftleitung 52 mit Druckluft beaufschlagt. Dadurch wird die Packermanschette 12, unter gleichzeitigem Aufeinanderzubewegen der Läufer 32 aufgeblasen bis sie an der Innenwand 14 des Sammelkanals 16 anliegt. Infolge des weiter steigenden Druckes im Innenraum 28 bewegt sich nun die Seitenmanschette 18 - entgegen der Kraft des Zugbandes 74 - durch Umstülpen in den Anschlusskanal 24 und legt sich dichtend an dessen Innenwand 22 an, wie dies insbesondere der Fig. 2 entnehmbar ist. Nun werden die Kartuschen mit dem Abdichtmaterial 16 aktiviert, um dieses durch die Zuleitung 58 in den, infolge ausgebrochenem Material zwischen dem Packer 10 und dem Sammelkanal 16 bzw. Anschlusskanal 24 und gegebenenfalls dem Erdreich freiliegenden Raum bei der Einmündungsstelle 26 einzubringen. Dieser ganze Vorgang wird mittels der Fernsehkamera 68 verfolgt und überprüft.

Sobald das Abdichtmaterial 60 teilausgehärtet ist - dies kann bei schnellhärtenden Zweikomponentenabdichtmaterialien 60 nach ca. 10 Minuten der Fall sein - werden die Druckluftleitung 52 gelüftet und die Steuerleitung 50 mit Druck beaufschlagt. Infolge der Expanderanordnung 72 wird die Seitenmanschette 18 durch Umstülpen und gleichzeitigem Abschälen ab der Innenwand 22 des Anschlusskanals 24 in den Innenraum 28 der Packermanschette 12 zurückgezogen. Dann löst sich die Packermanschette 12, unterstützt durch das Voneinanderwegbewegen der Läufer 32, von der Innenwand 14 des Sammelkanals 16 und geht in den in der Fig. 3 gezeigten Zustand über - in welchem sich die Packermanschette 12 in einer Strecklage befindet -, wonach der Packer 10 mit Hilfe des Roboterfahrzeugs 64 aus dem Sammelkanal 16 ausgefahren wird. Der Anschlusskanal 24 ist nun wieder in den Sammelkanal 16 eingebunden.

Falls Abdichtmaterial 60 verwendet wird, das eine längere Aushärtungszeit benötigt, ist es denkbar, die Kupplung 62 und die Ankopplung der Steuerleitung 50, Druckluftleitung 52 und Zuleitung 58 an das Roboterfahrzeug 64 derart auszubilden, dass der Packer 10 in aufgeblasenem Zustand im Sammelkanal 16 und Anschlusskanal 24 verbleiben kann und dann zu gegebener Zeit durch Wiederankoppeln an das Roboterfahrzeug 64 entlüftet und aus dem Sammelkanal 16 entfernt werden kann.

Es ist möglich, auf Läufer 32 zu verzichten und die Packermanschette 12 an ihren Enden fest anzuordnen. In diesem Fall ist es von Vorteil, zum Entlüften des Packers 10 die Druckluftleitung 52 mit einer Unterdruckquelle zu verbinden, um den entlüfteten Zustand mit kleinem Durchmesser des Packers 10 wieder zu erreichen.

Es ist auch denkbar, die Expanderanordnung 72 unterschiedlich auszubilden oder andere Mittel, wie eine Winde, vorzusehen, um die Seitenmanschette 18 beim Lüften des Packers 10 in den Innenraum 28 zurückzuziehen.

Im beschriebenen und in den Figuren gezeigten Beispiel sind die Packermanschette 12 und Seitenmanschette 18 aus durchsichtigem elastischem Kunststoffmaterial gebildet. Es ist jedoch auch denkbar, nur jene Abschnitte durchsichtig auszubilden, welche im Blickbereich der Fernsehkamera 68 liegen.

Es ist auch denkbar, auf eine Entlüftungsleitung 58' zu verzichten und Abdichtmaterial 60 mittels einer zweiten Zuleitung 58 einzubringen.

Wird eine Entlüftungsleitung 58' verwendet, wird diese mit Vorteil, beispielsweise mittels eines Ventils im Roboterfahrzeug, verschlossen, um das zugeführte Abdichtmaterial 60 unter höheren Druck setzen zu können, was die Qualität des Einbindens verbessert. Der Zeitpunkt für das Verschliessen der Entlüftungsleitung kann mit der Fernsehkamera 68 festgestellt werden.

Schlussendlich sei erwähnt, dass auch Tunnels vorgesehen werden können, die zum in den Figuren rechts liegenden Endbereich der Packermanschette 12 hin verlaufen. Ein einziger Tunnel 56 ist auch denkbar.

## Patentansprüche

1. Vorrichtung zum Abdichten einer Einmündungsstelle eines Anschlusskanals in einen Sammelkanal, mit einem Packer (10), der eine aufblasbare Packermanschette (12) für den Sammelkanal (16) und eine - im aufgeblasenen Zustand - von diesem abstehende, hutförmige, aufblasbare Seitenmanschette (18) für den Anschlusskanal (24) aufweist, wobei die Packermanschette (12) einen Innenraum (28) begrenzt und beim Übergang in die Seitenmanschette (18) einen Kragenbereich (20) aufweist, **dadurch gekennzeichnet, dass** der Packer (10) einen Tunnel (56) aufweist, welcher von einem axialen Endbereich (54) der Packermanschette (12) durch den Innenraum (28) zum Kragenbereich (20) verläuft und für die Aufnahme einer Zuleitung (58) für Abdichtmaterial (60) bestimmt ist.

2. Vorrichtung nach Anspruch 1, **dadurch gekennzeichnet**, das im Innenraum (28) eine Fernsehkamera (68) - zur Überprüfung der Lage der Seitenmanschette (18) bezüglich des Anschlusskanals (24) - angeordnet ist und die Packermanschette (12) und die Seitenmanschette (18) mindestens im Sichtbereich der Fernsehkamera (68) aus durchsichtigem Material bestehen.

3. Vorrichtung nach Anspruch 1 oder 2, **dadurch gekennzeichnet, dass** die Enden (30) der Packermanschette (12) an je einem ringförmigen Läufer (32) dicht befestigt sind, und die Läufer (32) an einen Lagerelement (36) in axialer Richtung verschiebbar gelagert sind.

4. Vorrichtung nach Anspruch 3, **dadurch gekennzeichnet, dass** jedem Läufer (32) ein Lagerelement (36) zugeordnet ist und die Lagerelemente (36) mittels eines im Innenraum (28) verlaufenden Trägerelements (66) miteinander verbunden sind.

5. Vorrichtung nach Anspruch 4, **dadurch gekennzeichnet, dass** die Fernsehkamera (68) am Trägerelement (66) angeordnet ist.

6. Vorrichtung nach Anspruch 4 oder 5, **dadurch gekennzeichnet, dass** die Lagerelemente (36) und zugeordneten Läufer (32) je einen, vorzugsweise ringförmigen Hubraum (46) begrenzen, der beim Lüften des Innenraums (28) mit einer Überdruckquelle verbindbar ist, um die Läufer (32) in axialer Richtung voneinander weg zu bewegen und die Packermanschette (12) in eine wenigstens nahezu Strecklage zu ziehen.

7. Vorrichtung nach einem der Ansprüche 1 bis 6, **gekennzeichnet durch** ein im Innenraum (28) angeordnetes und zum freien Ende der Seitenmanschette (18) verlaufendes Zugelement (74), das dazu bestimmt ist, beim Lüften des Innenraumes (28) die Seitenmanschette (18) **durch** Umstülpen in den Innenraum (28) zurückzuziehen.

8. Vorrichtung nach Anspruch 7, **dadurch gekennzeichnet, dass** das Zugelement (74) ein gummielastisches Zugband aufweist, das an der Seitenmanschette (18) befestigt und um ein Rollenpaar (86) geführt ist, und an einem zwischen den Rollen (84, 84') des Rollenpaars verlaufenden Abschnitt des Zugbandes ein Umlenkelement (80) befestigt ist, um das der zwischen der Seitenmanschette (18) und dem Rollenpaar (86) verlaufende Abschnitt des Zugbandes geführt ist.

9. Vorrichtung nach einem der Ansprüche 1 bis 8, **gekennzeichnet durch** ein Ankoppelelement (62) zum Ankoppeln des Packers (10) an ein selbstfahrendes Kanalroboterfahrzeugs (64).

## Claims

1. Device for sealing a junction where a branch line joins a header, with a packer (10) which has an inflatable packer sleeve (12) for the header (16) and a hat-shaped, inflatable side sleeve (18) for the branch line (24) that protrudes from said header - in the inflated state -, the packer sleeve (12) delimiting an interior space (28) and having a collar region (20) at the transition into the side sleeve (18), **characterized in that** the packer (10) has a tunnel (56) which runs from an axial end region (54) of the packer sleeve (12) through the interior space (28) to the collar region (20) and is intended for receiving a feed line (58) for sealing material (60).

2. Device according to Claim 1, **characterized in that** a television camera (68) is arranged in the interior space (28) - for checking the position of the side sleeve (18) with respect to the branch line (24) - and the packer sleeve (12) and the side sleeve (18) consist of transparent material, at least in the viewing region of the television camera (68).

3. Device according to Claim 1 or 2, **characterized in that** the ends (30) of the packer sleeve (12) are each fastened in a sealed manner on an annular runner (32), and the runners (32) are mounted on a bearing element (36) displaceably in the axial direction.

4. Device according to Claim 3, **characterized in that** each runner (32) is assigned a bearing element (36) and the bearing elements (36) are connected to each other by means of a carrier element (66) running in the interior space (28).

5. Device according to Claim 4, **characterized in that** the television camera (68) is arranged on the carrier element (66).

6. Device according to Claim 4 or 5, **characterized in that** the bearing elements (36) and assigned runners (32) each delimit a displacing space (46) which is preferably annular and can be connected to a positive-pressure source when the interior space (28) is deflated in order to move the runners (32) away from each other in the axial direction and to draw the packer sleeve (12) into an at least virtually extended position.

7. Device according to one of Claims 1 to 6, **characterized by** a drawing element (74) which is arranged in the interior space (28), runs to the free end of the side sleeve (18) and is intended for drawing the side sleeve (18) back into the interior space (28) by inversion when the interior space (28) is deflated.

8. Device according to Claim 7, **characterized in that** the drawing element (74) has a rubber-elastic drawing band which is fastened on the side sleeve (18) and led around a pair of rollers (86), and, on a portion of the drawing band running between the rollers (84, 84') of the pair of rollers, there is fastened a deflecting element (80), around which the portion of the drawing band running between the side sleeve (18) and the pair of rollers (86) is led.

9. Device according to one of Claims 1 to 8, **characterized by** a coupling element (62) for coupling the packer (10) to a self-propelled line robot vehicle (64).

## Revendications

1. Dispositif pour rendre étanche un point de débouché d'une canalisation de raccordement dans un collecteur, comprenant une garniture d'étanchéité (10) qui présente une manchette d'étanchéité gonflable (12) pour le collecteur (16) et une manchette latérale gonflable (18) en forme de chapeau qui dépasse de celle-ci lorsqu'elle est gonflée pour la canalisation de raccordement (24), la manchette d'étanchéité (12) délimitant un espace intérieur (28) et présente lors de la transition dans la manchette latérale (18) une zone à collerette (20), **caractérisé en ce que** le garniture d'étanchéité (10) présente un tunnel (56) qui s'étend à travers l'espace intérieur (28) depuis une zone d'extrémité axiale (54) de la manchette d'étanchéité (12) jusqu'à la zone à collerette (20) et qui est conçu pour recevoir une conduite d'arrivée (58) pour du matériau d'étanchéité (60).

2. Dispositif selon la revendication 1, **caractérisé en ce qu'**une caméra de télévision (68) destinée à contrôler la position de la manchette latérale (18) par rapport à la canalisation de raccordement (24) est disposée dans l'espace intérieur (28) et la manchette d'étanchéité (12) ainsi que la manchette latérale (18) se composent d'un matériau transparent au moins dans la zone visible par la caméra de télévision (68).

3. Dispositif selon la revendication 1 ou 2, **caractérisé en ce que** les extrémités (30) de la manchette d'étanchéité (12) sont à chaque fois fixées de manière étanché à un curseur (32) de forme annulaire et les curseurs (32) sont logés sur un élément de palier (36) de manière à pouvoir coulisser dans le sens axial.

4. Dispositif selon la revendication 3, **caractérisé en ce qu'**à chaque curseur (32) est associé un élément de palier (36) et les éléments de palier (36) sont reliés entre eux au moyen d'un élément porteur (66) qui s'étend dans l'espace intérieur (28).

5. Dispositif selon la revendication 4, **caractérisé en ce que** la caméra de télévision (68) est montée sur l'élément porteur (66).

6. Dispositif selon la revendication 4 ou 5, **caractérisé en ce que** les éléments de palier (36) et les curseurs (32) associés délimitent à chaque fois un espace de déplacement (46) de préférence de forme annulaire, lequel peut être relié avec une source de surpression lors de la ventilation de l'espace intérieur (28) afin d'éloigner les curseurs (32) les uns des autres dans le sens axial et d'étirer la manchette d'étanchéité (12) dans une position au moins quasiment allongée.

7. Dispositif selon l'une des revendications 1 à 6, **caractérisé par** un élément de traction (74) disposé dans l'espace intérieur (28) et s'étendant en direction de l'extrémité libre de la manchette latérale (18), lequel est conçu, lors de la ventilation de l'espace intérieur (28), pour tirer la manchette latérale (18) en arrière par relevage dans l'espace intérieur (28).

8. Dispositif selon la revendication 7, **caractérisé en ce que** l'élément de traction (74) présente une bande de traction élastique en caoutchouc qui est fixée à la manchette latérale (18) et guidée autour d'une paire de galets (86), et à une section de la bande de traction qui s'étend entre les galets (84, 84') de la paire de galets est fixé un élément de renvoi (80) autour duquel passe la section de la bande de traction qui s'étend entre la manchette latérale (18) et la paire de galets (86).

9. Dispositif selon l'une des revendications 1 à 8, **caractérisé par** un élément d'accouplement (62) destiné à accoupler la garniture d'étanchéité (10) à un véhicule robotisé de canalisation (64) à déplacement autonome.
